# EUROPÄISCHE PATENTSCHRIFT

(11) **EP 0 367 778 B1**
(45) Veröffentlichungstag und Bekanntmachung des Hinweises auf die Patenterteilung: **20.04.1994**
(21) Anmeldenummer: 88905685.9
(22) Anmeldetag: 07.07.1988
(51) Int. Cl.: G02F 3/00

(54) **SCHALTERMATRIX MIT OPTISCH NICHTLINEAREN ELEMENTEN UND VERFAHREN ZUR HERSTELLUNG DERSELBEN**
SWITCH MATRIX WITH NON-LINEAR OPTICAL ELEMENTS AND PROCESS FOR MANUFACTURING IT
MATRICE DE COMMUTATION A ELEMENTS OPTIQUES NON-LINEAIRES ET SON PROCEDE DE FABRICATION

(30) Priorität: 10.07.1987 DE 3722881
(43) Veröffentlichungstag der Anmeldung: 16.05.1990
(73) Patentinhaber: KERNFORSCHUNGSZENTRUM KARLSRUHE GMBH, D-76021 Karlsruhe (DE)
(72) Erfinder: MIKOSCH, Falk, D-7523 Graben-Neudorf (DE); SMITH, Stanley, Desmond, Edinburgh EH14 4AS (GB)
(86) Internationale Anmeldenummer: DE8800417
(87) Internationale Veröffentlichungsnummer: WO8900714

(56) Entgegenhaltungen:
- Applied Physics Letters, vol. 48, no. 2, January 1986 (New York, US) T. Venkatesan et al.: "Fabrication of arrays of GaAs optical bistable devices", pp 145-147

## Beschreibung

Die Erfindung betrifft eine Schaltermatrix nach dem Oberbegriff des Anspruches 1 und zwei Verfahren zur Herstellung derselben.

Optisch nichtlineare Elemente können als Schalter für Licht arbeiten. Vereinfacht läßt sich dieser Vorgang folgendermaßen beschreiben:
Wird die Leistung eines Laserstrahls, der ein solches Element bestrahlt, über einen bestimmten Schwellwert erhöht, so ergibt sich ein sprunghafter Anstieg des transmittierten und eine sprunghafte Abnahme des reflektierten Lichtes. Dieser Effekt ermöglich es, solche optisch nichtlinearen Bauelemente als Schalterelemente für eine digitale optische Datenverarbeitung zu verwenden. Für diesen Einsatz ist eine zweidimensionale Anordnung solcher Schalter besonders interessant, eine Schaltermatrix, bei der die einzelnen Schaltelemente lateraler Abmessungen in der Größenordnung von 10 µm x 10 µm besitzen und möglichst eng benachbart sind.

Eine solche Schaltermatrix ist aus "Optical Bistability III" Springer-Verlag ISBN 3-540-16512-6, Seiten 39 - 41, bekannt. Diese zweidimensionale Anordnung von Schaltelementen wurde mittels MBE (molecular beam epitaxy) realisiert. Auf einem plattenförmigen 0,2 µm dicken Al_{0.4}Ga_{0.6}As-Substrat sind 9 x 9 µm² große und 1,5 µm dicke optisch aktive Schichten aus GaAs im gegenseitigen Abstand von 20 µm aufgebracht. Die Abstände zwischen den Elementen können wegen der gegenseitigen Beeinflussung nicht weiter verringert werden. Außerdem ist der Herstellungsprozeß aufwendig und teuer.

Es sind aber auch optisch nichtlineare Schaltelemente bekannt, die durch Abscheidung dünner Schichten auf einem Substrat hergestellt werden können, ohne daß ein epitaktisches Wachstum auf dem Substrat notwendig ist. Ein typisches Beispiel stellt das Material ZnSe dar, das auf einem Glas- oder Saphir-Substrat abgeschieden wird. Bisher ist nicht versucht worden, einzelne Flecken solcher Materialien auf dem Substrat räumlich voneinander zu trennen, sondern man hat verschiedene Flecken in der gleichen Schicht mit räumlich begrenzten Laserlichtbündeln parallel zueinander angesprochen. Die Definition einzelner Schaltelemente nach diesem Verfahren erfolgte also durch die räumliche Ausdehnung des Laserlichtes. Durch den thermischen Kontakt und durch die Diffusion von Ladungsträgern ist man gezwungen, Abstände der als Schaltelemente arbeitenden beleuchteten Flecken in der Größenordnung von Millimetern statt, wie gewünscht, in der Größenordnung von Mikrometern einzuhalten, um ein Übersprechen auf zulässige Werte zu beschränken. Diese Lösung ist unbefriedigend, weil wegen des notwendigen relativ großen Abstands der einzelnen Schaltelemente eine solche Schaltermatrix um Größenordnungen weniger Schaltelemente besitzen können als gewünscht wird.

Der Erfindung liegt die Aufgabe zugrunde, eine optische Schaltermatrix mit sehr hoher Packungsdichte der Schaltelemente bei geringer gegenseitiger Beeinflussung (Übersprechen) und ein Verfahren zur Herstellung derselben bereitzustellen.

Diese Aufgabe wird erfindungsgemäß mittels der im kennzeichnenden Teil des Anspruches 1 angegebenen Merkmale und der im kennzeichnenden Teil der in Anspruch 4 und 5 angegebenen Verfahren gelöst.

Die übrigen Ansprüche geben vorteilhafte Weiterbildungen und Ausführungsformen der Erfindung wieder.

Die erfindungsgemäße Säulenstruktur des Substrats mit einem hohen Aspektverhältnis ermöglicht es, daß die einzelnen Schaltelemente relativ eng beieinanderliegen können. Das führt zu einer hohen Anzahl und hohen Packungsdichte der Einzelelemente, bei sehr guter gegenseitiger Entkopplung. Die Strukturierung mit dem gewünschten sehr hohen Aspektverhältnis wird durch das angegebene LIGA-Verfahren, das lithographische, gasvanische und abformtechnische Fertigungsschritte beinhaltet, ermöglicht.

Die einfachste Möglichkeit zur Herstellung solcher Substrate besteht aus der Verwendung von plattenförmigem Röntgenresist, z.B. PMMA (Plexiglas), das durch Röntgentiefenlithographie bürstenförmig strukturiert wird. Die Herstellung von Mikrostrukturkörpern nach dem LIGA-Verfahren ist u.a. in dem KfK-Bericht 3995 des Kernforschungszentrums Karlsruhe (November 1985) beschrieben und dargestellt. Danach wird z.B. ein röntgenstrahlempfindlicher Positiv-Resists auf eine metallische Grundplatte aufgebracht und partiell über eine Maske mit Röntgenstrahlen so bestrahlt und entwickelt, daß Negativformen von plattenförmigen Mikrostrukturkörpern entstehen. Die Höhe der Negativform entspricht der Schichtdicke des Resists; sie kann, je nach Eindringtiefe der Röntgenstrahlung bis 2 mm betragen. Anschließend wird die Negativform galvanisch mit einem Metall unter Verwendung der Grundplatte als Elektrode aufgefüllt, worauf das restliche Resistmaterial mit einem Lösungsmittel entfernt wird. Bei der Abformtechnik wird eine durch Röntgentiefenlithographie und Mikrogalvanoformung hergestellte Metallstruktur zur vielfachen Herstellung von Kunststoff-Formen verwendet, die wiederum z.B. durch galvanische Abscheidung von Metall aufgefüllt werden können, worauf der Kunststoff wieder entfernt wird.

Mit dieser Technik lassen sich extrem genaue und feine Strukturen herstellen mit lateralen Abmessungen im Mikrometerbereich bei einer frei wählbaren Höhe bis zu ca. 2 mm. Bei etwas geringeren Höhen lassen sich auch minimale laterale Abmessungen im Submikrometerbereich realisieren.

Dieses Verfahren eignet sich vorzugsweise zur Herstellung von strukturierten Substraten für die Abscheidung von optisch aktiven Schichten, die keine Epitaxie verlangen.

Für optisch aktive Schichten, die durch ein epitaktisches Wachstum erzeugt werden müssen, wird die Verwendung von Kristallen, z.B. Si, vorgeschlagen, die durch anisotropes Ätzen eine säulenförmige Struktur bekommen haben.

Die Erfindung ist im folgenden anhand eines Ausführungsbeispiels mittels der Figuren 1 bis 6 beschrieben. Dabei zeigt
- Figur 1: das Funktionsprinzip eines optischen nichtlinearen Schaltelementes im Schaltzustand mit niedriger Transmission,
- Figur 2: das Funktionsprinzip eines optischen nichtlinearen Schaltelementes im Schaltzustand mit hoher Transmission,
- Figur 3: schematisch die gegenseitige Beeinflussung zweier benachbarter optischer Schaltelemente,
- Figur 4: schematisch eine denkbare Verbesserung durch eine Strukturierung der optisch aktiven Schicht,
- Figur 5: eine Strukturierung des Substrates zu Säulen mit niedrigem Aspektverhältnis und
- Figur 6: eine Strukturierung des Substrates zu Säulen mit hohem Aspektverhältnis.

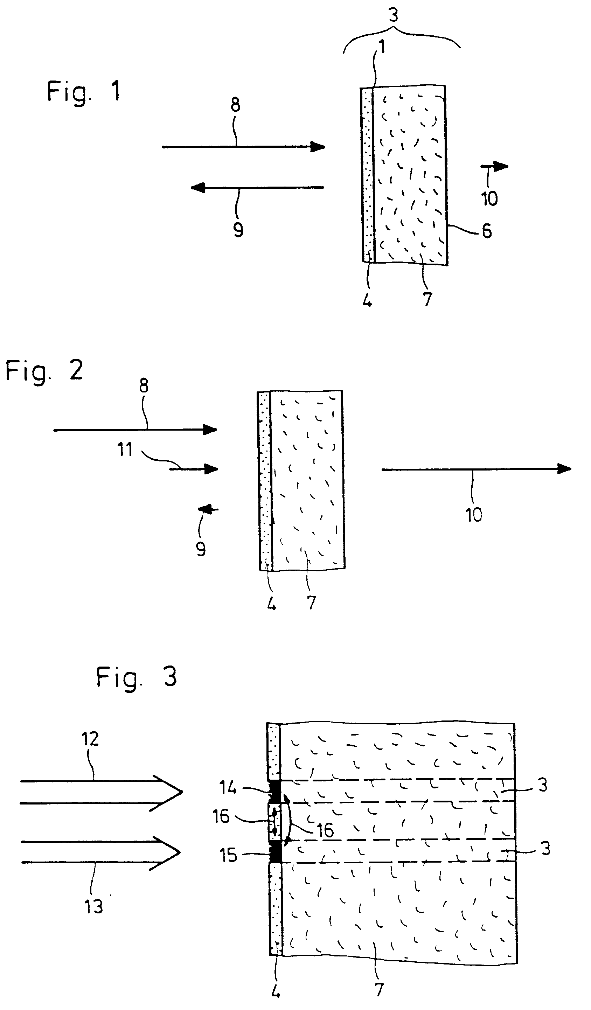

Figur 1 zeigt eine vereinfachte Darstellung der Funktionsweise eines optischen nichtlinearen Schaltelementes auf einem transparenten Substrat unter Vernachlässigung der geringen Absorptionsverluste. Die Länge der gemalten Pfeile soll die Intensität der Strahlen symbolisieren. Das Schaltelement 3 besteht in diesem Falle aus einem transparenten Substrat 7, auf dessen Oberfläche 1 die optisch aktive Schicht 4 aufgebracht ist. Die Intensität eines Haltestrahls 8 liegt unterhalb eines bestimmten Schwellwertes, bei dem der sprunghafte Übergang vom Schaltzustand niedriger Transmission in den Schaltzustand hoher Transmission stattfinden würde. Dies ergibt einen reflektierten Strahl 9 der Intensität des Haltestrahls 8 vermindert um einen Verlustanteil, der als transmittierter Strahl 10 das Substrat 7 verläßt.

Nach Figur 2 wird mit einer relativ geringen Intensität eines Signalstrahls 11 der Schwellwert überschritten und der Übergang in den Schaltzugang hoher Transmission bewirkt. Der reflektierte Strahl 9 verschwindet bis auf einen bedeutungslosen Rest und die Intensitäten des Haltestrahls 8 und des Signalstrahls 11 ergeben die Intensität des transmittierten Strahls 10.

In Figur 3 sind im Querschnitt zwei Schaltelemente 3 einer Schaltermatrix dargestellt, die durch die räumliche Ausdehnung einer ersten Wechselwirkungszone 14 mit einem ersten Strahlenbündel 12 und einer zweiten Wechselwirkungszone 15 mit einem zweiten Strahlenbündel 13 begrenzt sind. Der kleinstmögliche Abstand zwischen den beiden Schaltelementen 3 wird von deren störender Wechselwirkung 16 durch thermischen Kontakt und Diffusion von Ladungsträgern durch die optisch aktive Schicht 4 und durch das Substrat 7 begrenzt. Deshalb wird darüber nachgedacht, wie die einzelnen Schaltelemente bei relativ kleinem lateralen Abstand durch Einbringen von Gräben zwischen ihren, räumlich getrennt werden können. Solche Gräben sind für diesen Anwendungszweck bis jetzt nicht fabriziert worden. Man denkt an den Einsatz einer Diamantsäge oder eines Laserstrahls als Fräswerkzeug. Sollten solche Gräben jemals verwirklicht werden, so werden sie auf jeden Fall ein Aspektverhältnis kleiner etwa 5 besitzen, d.h. die Tiefe eines Grabens wird höchstens um den Faktor 5 größer sein als seine Breite. Für eine effektive Entkopplung sind tiefe Gräben mit einem wesentlich höheren Aspektverhältnis anzustreben. Aus demselben Grunde ist auch der Einsatz der aus der Herstellung mikroelektronischer Schaltkreise bekannten Trockenätzprozesse für eine solche Strukturierung nicht sinnvoll, Sofern die hier vorliegenden Materialien und Substrate dieses überhaupt zulassen sollten.

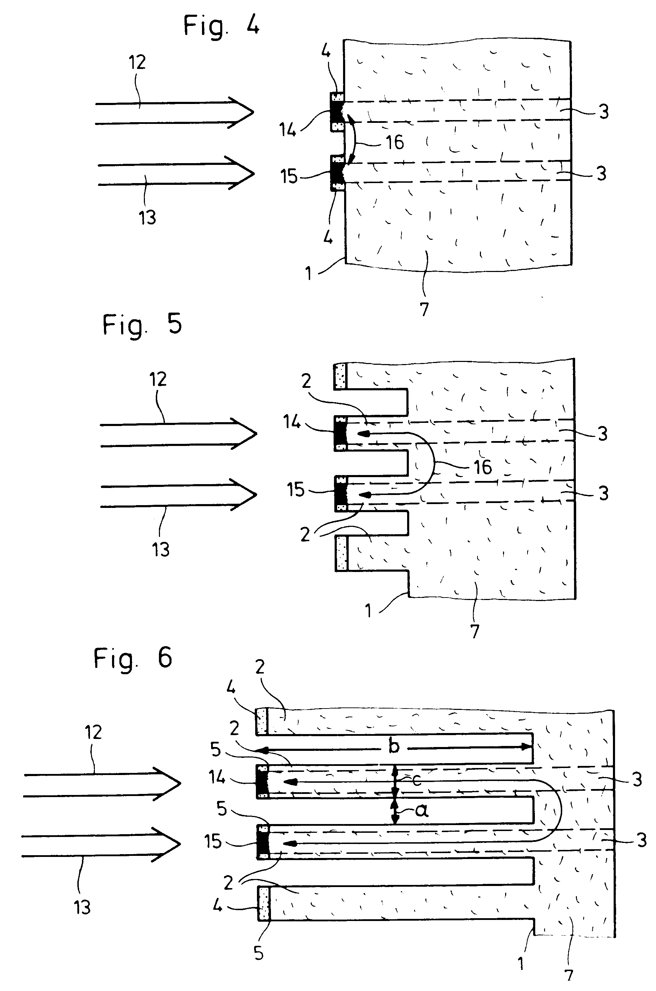

Figur 4 zeigt eine denkbare Verbesserung durch eine Strukturierung der optisch aktiven Schicht 4, mit der zumindest die störende Wechselwirkung 16 durch die optisch aktive Schicht 4 unterbunden wird.

Figur 5 zeigt im Schnitt die erfindungsgemäße Strukturierung der Substratoberfläche 1 mit der durch die Säulen 2 die störende Wechselwirkung 16 durch das Substrat 7 reduziert wird.

Eine weitgehende Entkopplung der beiden Schaltelemente 3 wird durch eine Strukturierung der Substratoberfläche 1 mit einem hohen Aspektverhältnis nach Figur 6 erreicht. Nach dem LIGA-Verfahren können transparente und nichttransparente Substrate mit Aspektverhältnissen von 100 bei genügender Stabilität hergestellt werden. Die typischen Abmessungen sind: a = 5 µm, b = 500 µm und c = 10 µm bis 30 µm. Die einfachste Möglichkeit zur Herstellung solcher Substrate besteht aus der Verwendung eines Röntgenresists, z.B. PMMA (Plexiglas) als Substratmaterial durch Röntgentiefenlithographie. Durch Abscheidung optisch aktiver Schichten 4 auf den Stirnflächen 5 den Säulen 2 werden dort einzelne Schaltelemente 3 erzeugt, die getrennt voneinander parallel mit Lichtstrahlen angesprochen werden können. Eine teilweise seitliche Bedampfung der Säulen und des Bodenraumes zwischen ihnen, stört die Funktion dieser Elemente nicht. Im Bedarfsfall gibt es einige Möglichkeiten, die Beschichtung zwischen den Säulen zu unterbrechen.

Für eine preiswerte Massenproduktion von solchen Substraten erlaubt das LIGA-Verfahren die Abformung mit Kunststoffen. Damit sind auch andere transparente Substrat-Materialien verwendbar. Falls es gelingen sollte, innerhalb von LIGA-Strukturen Sinterprozesse durchzuführen, kämen auch Gläser und Keramiken in Frage.

Die Verwendung von transparenten Substraten für die optischen Schaltelemente ist nur dann notwendig, wenn das transmittierte Licht als Informationsträger dient. Für eine Reihe von diskutierten Anwendungen genügt das reflektierte Licht als Informationsträger. In diesem Fall kann das Substrat nicht transparent sein und es ist möglich, die gesamte Rückseite des Substrates zur Thermostatisierung zu verwenden. Sehr gut eignen sich nach dem LIGA-Verfahren hergestellte bürstenförmige Metallstrukturen, z.B. aus Ni oder Cu, auf die, falls notwendig, eine Schicht zur elektrischen Isolation der optischen Schaltelemente und zur Absorption der durch die Schaltelemente transmittierten Strahlung aufgebracht werden kann.

### Bezugszeichenliste:

- 1: Substratoberfläche
- 2: Säulen
- 3: Schaltelement
- 4: optisch aktive Schicht
- 5: Stirnfläche der Säule
- 6: der Säule 2 abgewandte Seite des Substrats 7
- 7: Substrat
- 8: Haltestrahl
- 9: reflektierter Strahl
- 10: transmittierter Strahl
- 11: Signalstrahl
- 12: erstes Strahlenbündel
- 13: zweites Strahlenbündel
- 14: erste Wechselwirkungszone
- 15: zweite Wechselwirkungszone
- 16: störende Wechselwirkung

## Patentansprüche

1. Schaltermatrix mit optisch nichtlinearen Elementen, die als optisch aktive Schichten auf einer gemeinsamen Substratoberfläche liegen
dadurch gekennzeichnet, daß
die Substratoberfläche (1) als aus Säulen (2) bestehende Mikrostruktur ausgebildet ist und daß die optisch aktiven Schichten (4) auf Stirnflächen (5) von freien Säulenenden, in einem Querschnittsbereich von Säulen (2) und/oder auf den Säulen (2) abgewandten Seiten (6) des Substrats (7) aufgebracht sind, wobei die Säulen (2) laterale Abstände im Mikrometerbereich und eine Höhe bis zu 2 mm haben.

2. Schaltermatrix nach Anspruch 1, dadurch gekennzeichnet, daß das Substrat (7) transparent ausgebildet ist.

3. Schaltermatrix nach Anspruch 1, dadurch gekennzeichnet, daß das Substrat (7) nichttransparent ausgebildet ist.

4. Verfahren zur Herstellung der Schaltermatrix nach Anspruch 1 und 2, dadurch gekennzeichnet, daß die säulenartige Mikrostruktur des Substrates (7) nach einem Verfahren der Röntgenlithographie und Mikrogalvanoformung und Kunststoff-Mikroabformtechnik, dem sogenannten LIGA-Verfahren, hergestellt wird.

5. Verfahren zur Herstellung der Schaltermatrix nach Anspruch 1 und 2, dadurch gekennzeichnet, daß die säulenartige Mikrostruktur des Substrates (7) durch anisotropes Ätzen eines Kristalls z.B. Si hergestellt wird.

## Claims

1. Switch matrix having optically non-linear elements which lie, as optically active layers, on a common substrate surface, characterised in that the substrate surface (1) is a microstructure comprising columns (2), and in that the optically active layers (4) are applied to end faces (5) of free column ends, in a cross-sectional region of columns (2), and/or to sides (6) of the substrate (7) remote from the columns (2), the columns (2) having lateral spacings therebetween in the micrometer range and a height of up to 2 mm.

2. Switch matrix according to claim 1, characterised in that the substrate (7) is transparent.

3. Switch matrix according to claim 1, characterised in that the substrate (7) is not transparent.

4. Method of producing the switch matrix according to claims 1 and 2, characterised in that the column-like microstructure of the substrate (7) is produced according to a method of X-ray lithography and microgalvano-shaping and according to a plastics material micromoulding technique, the so-called LIGA method.

5. Method of producing the switch matrix according to claims 1 and 2, characterised in that the column-like microstructure of the substrate (7) is produced by the anisotropic etching of a crystal, e.g. Si.

## Revendications

1. Matrice de commutation comportant des éléments optiques non linéaires situés, comme couches optiquement actives, sur une surface de substrat commune, caractérisée en ce que :
- la surface de substrat (1) est réalisée comme une microstructure composée de colonne et ;
- les couches (4) optiquement actives sont appliquées sur des faces frontales (5) des extrémités libres des colonnes, dans une zone de section transversale des colonnes (2) et/ou sur les faces (6) du substrat (7) éloignées des colonnes (2), les colonnes (2) présentant des écartements latéraux de l'ordre du micromètre et une hauteur allant jusqu'à 2 mm.

2. Matrice de commutation selon la revendication 1, caractérisée en ce que le substrat (7) est réalisé transparent.

3. Matrice de commutation selon la revendication 1, caractérisée en ce que le substrat (7) est réalisé non transparent.

4. Procédé de production de la matrice de commutation selon les revendications 1 et 2, caractérisé en ce que la microstructure du type colonne du substrat (7) est produite selon un procédé de lithographie aux rayons X, de microformage par galvanoplastie et de technique de micromoulage de matière plastique, procédé ainsi appelé LIGA.

5. Procédé de production de la matrice de commutation selon les revendications 1 et 2, caractérisé en ce que la microstructure de type colonne du substrat (7) est produite par corrosion anisotrope d'un cristal tel que par exemple du Si.
